# EUROPEAN PATENT SPECIFICATION

(11) **EP 1 017 005 B1**
(45) Date of publication and mention of the grant of the patent: **21.08.2013**
(21) Application number: 99309623.9
(22) Date of filing: 30.11.1999
(51) Int. Cl.: G06K 7/00, G06K 7/08

(54) **A system and method for communicating with multiple transponders**
System und Verfahren zur Übertragung mit mehreren Transpondern
Système et méthode pour communiquer avec plusieurs transpondeurs

(30) Priority: 01.12.1998 US 203154
(43) Date of publication of application: 05.07.2000
(73) Proprietor: Texas Instruments Incorporated, Dallas, TX 75251 (US)
(72) Inventor: Mahdavi, Pourang, Mountain View California 94040 (US)
(74) Representative: Holt, Michael

(56) References cited:
- EP-A- 0 467 036
- EP-A- 0 779 520
- WO-A-98/27441

## Description

### FIELD OF THE INVENTION

The present invention relates to transponder systems and more particularly to systems that contain several transponders closed to each other.

### BACKGROUND OF THE INVENTION

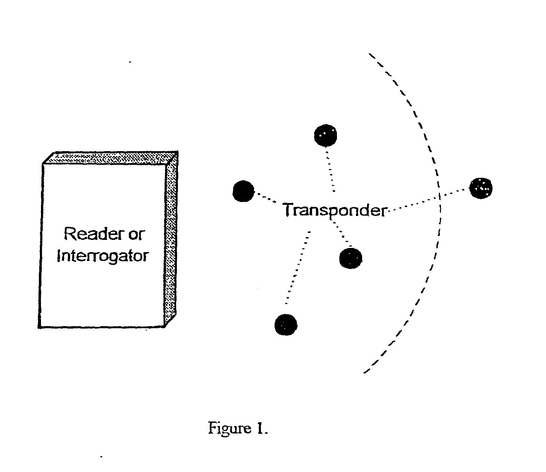

Transponder arrangements are used to identify and interrogate data in a contactless manner. Transponder systems typically include an interrogator that transmits radio frequency pulses and a plurality of transponders that receive the pulses and respond with data in the form of a modulated radio frequency carrier. However, a problem arises when multiple transponders units are present within the field of an interrogation unit and responding simultaneously as shown in FIG. 1. In this case either none or only the transponder with the strongest field strength is detected. Accordingly, what is needed is a system and method for detecting the signal of multiple transponders. The present invention addresses such a need.

EP-A-0 467 036 discloses a method and apparatus for radio identification and tracking. An interrogator broadcasts a signal to all tags within reception range, and the tags respond after pseudo-random delays. When the interrogator has identified a tag, it signals that fact back to the tag and the tag returns to standby mode. The tags that were not identified by the interrogator retransmit their identification signals, and the process continues until all tags within range of the interrogator have been identified.

### SUMMARY OF THE INVENTION

In accordance with the present invention there is provided a method and system of reading a plurality of transponders as defined in the appended claims. The system and method solve the problem of several transponders in the same reading field with a minimum of effort on the transponder side. This is important because in most of applications the transponder is the cost critical item. The arbitration among the transponders is solved by the fact that the reader unit sends a burst interrogation signal instead of a continuous field. The end of burst signal is detected by each transponder, and is used to launch a random delay generator. At the end of the delay, the transponder with the shortest delay sends a short signal to the reader that is interpreted as a Request To Send signal from the transponder. The reader responds with another burst that causes this transponder to send the main data and the other transponders to stop the transmission. After the first transponder has finished the data transmission, it goes to the sleep mode. The whole process is repeated until there are no more transponders left in the field. If the random delay generated in two or more transponders is the same, they start the transmission of the Request To Send signal at the same time. This collision is detected at the reader, which ignores this signal and repeats the process.

### BRIEF DESCRIPTION OF THE DRAWINGS

FIG. 1 illustrates multiple transponders in the same interrogation field.
FIG. 2 illustrates the principle of the multi-transponder protocol with the interrogation bursts of the reader and the example of two transponders in the reader field.
FIG. 3 illustrates the principle of the multi-transponder protocol, collision case.
FIG. 4 illustrates state-diagram for the multi-transponder protocol, reader side.
FIG. 5 illustrates state-diagram for the multi-transponder protocol, transponder side.
FIG. 6 illustrates the block diagram of the hardware of the reader and the transponder required for the multi-transponder protocol.

### DETAILED DESCRIPTION

The present invention relates to transponder systems and more particularly to systems that contain several transponders close to each other. The following description is presented to enable one of ordinary skill in the art to make and use the invention and is provided in the context of a patent application and its requirements. Various modifications to the preferred embodiment will be readily apparent to those skilled in the art and the generic principles herein may be applied to other embodiments. Thus, the present invention is not intended to be limited to the embodiment shown but is to be accorded the widest possible scope consistent with the principles and features described herein.

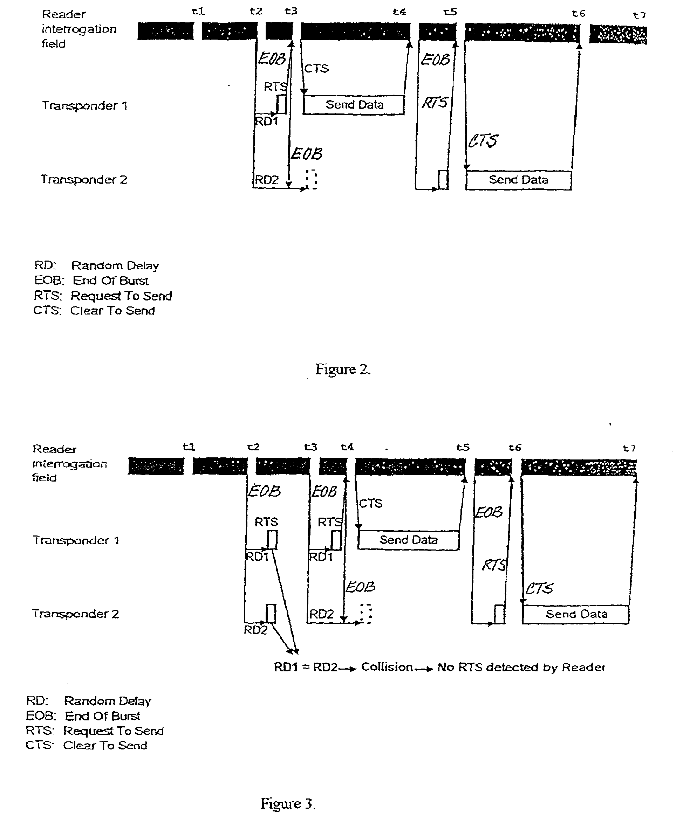

The principal method of interrogation of several transponders in the same reader field is shown in Figure 2 for the simplified case of only 2 transponders. The reader transmits field burst in a periodical manner. Assuming the transponders enter the reader field at time t1, the End Of Burst signal (EOB) is detected in the transponders at time t2 and is used to trigger a Random Delay (RD) generator, which causes a delay RD1 for the transponder 1 and delay RD2 for the transponder 2. After the delay, the transponder sends a Request To Send (RTS) signal back to the reader, which consists of a defined pattern plus a random value. Assuming RD2 > RD1, the transponder 1 will send the RTS signal first As the RTS signal is detected in the reader at time t3, it forces immediately another field gap in the current field burst. The beginning of the next burst is interpreted in the transponder I as a Clear To Send (CTS) signal, which causes the transponder 1 to respond with the main data. However, the CTS signal is interpreted in the transponder 2 as a stop signal, which causes the transponder 2 to not to transmit the RTS signal, which the transponder would otherwise send at time RD2. The transponder 1 accomplishes now the transmission of the main data, until receiving another End Of Burst signal from the reader at time t4. After t4, transponder 1 goes into a sleep mode, and only the transponder 2 will be active in the field. Hence after another arbitration phase (t4-t5) the data from the transponder 2 is transmitted to the reader.

Figure 3 shows the collision case, when the random delay generators of the transponders generate the same delay (RD1=RD2) after the EOB signal at t2. In this case the reader because of the collision of the signals can detect no valid RTS signal. The collision detection at the reader is ensured because there is a random pattern encoded in the RTS signal. Since no valid RTS signal is detected, the reader continues the periodic field burst Transmission until the random delays generated in the transponders are different, i.e. at t3. At this time the protocol follows the same way as in Figure 2 until both transponders are detected.

The described method is primarily suitable for passive transponders, which take their required energy from the interrogation field. In this case, the gap for generating the End Of Burst signal must be so short that the transponder can be supplied by a storage capacitor on the transponder. However, the described protocol can also be used for active transponders, which contain an active power source.

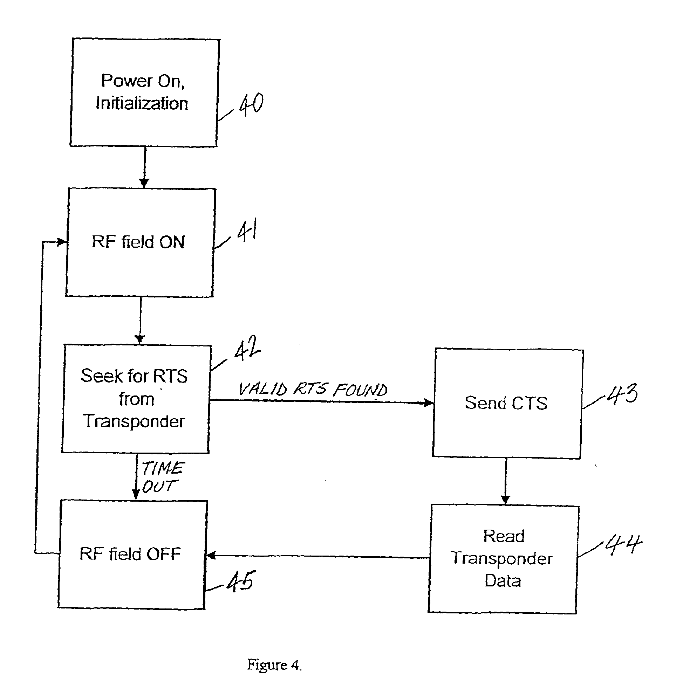

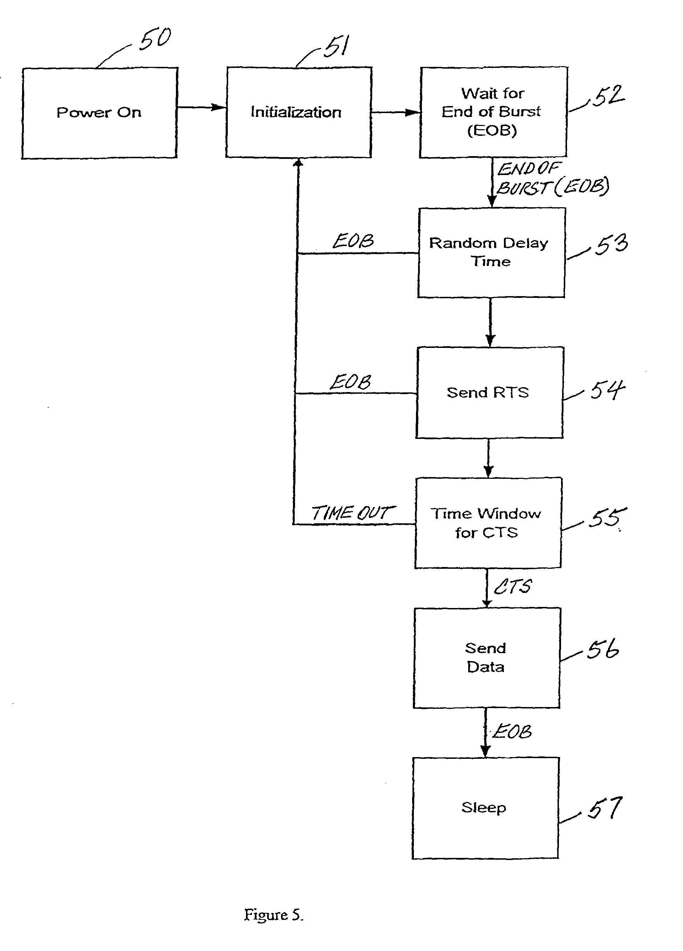

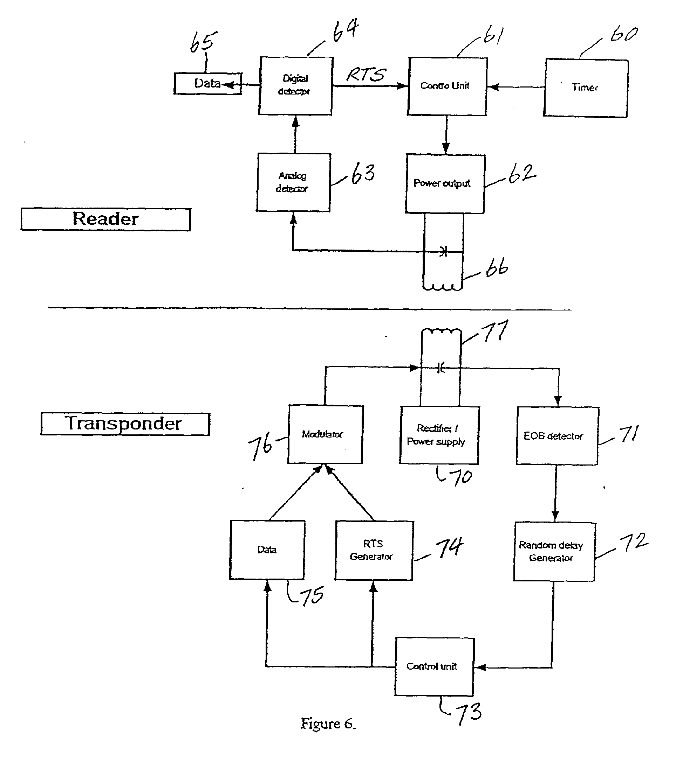

Figures 4 and 5 describe possible state diagrams of the reader and transponders to realize the described protocol. Figure 6 shows the block diagram of the hardware of the reader and the transponder required for the multi-tag protocol.

Referring to Fig. 4 of the accompanying drawings, the reader first performs its "power on" and "initialization" functions (step 40) after which its radio-frequency field is switched on (step 41) to provide the burst interrogation signal including the "end of burst" signal which is used by a transponder within the radio-frequency field to begin the generation of a delay as described above. On receiving a "request to send" (RTS) signal from a transponder (step 42), the reader sends a "clear to send" (CTS) signal (step 43) which prompts the transponder to send its data and the reader reads the transponder data (step 44). On reading the transponder data, the reader sends another "end of burst" signal and switches off its radio-frequency field (step 45) which the transponder takes as an acknowledgement that its data has been read. The reader repeats the cycle by returning to step 41. At step 42, should the reader not receive a "request to send" signal from a transponder within a period allowed for a transponder to respond, it moves directly to step 45 and then to step 41 to repeat the cycle.

Referring to Fig. 5 of the accompanying drawings, the transponder first performs its "power on" and "initialization" functions (steps 50, 51) after which it is ready to receive an "end of burst" (EOB) signal from a reader (step 52). When an "end of burst" signal is detected, a random delay generator is activated (step 53) and a "ready to send" signal sent at the end of the delay (step 54). A time window is then opened for receiving a "clear to send" signal (CTS) from a reader (step 55) and, on receiving such a signal, the transponder data is sent (step 56). On receiving the data, the reader sends another "end of burst" signal acknowledging the receipt of the data and the transponder goes into a "sleep" mode (step 57). Returning to step 53, should there be a conflict with another transponder and the other transponder has sent its "ready to send" signal, the present transponder will be so informed by the receipt of an "end of burst" signal while at step 53. In that situation, the present transponder returns to step 51. Similarly, in a conflict with another transponder, the present transponder can return to step 51 from step 54. If, at the end of the time window for receiving a "clear to send" signal no such signal has been received the present transponder returns to step 51.

The reader shown in Fig. 6 of the accompanying drawings includes a timer 60 connected to drive a control unit 61 which is connected to drive an output circuit 62 which includes a first tuned circuit 66. The first tuned circuit 66 is connected to an analogue detector 63 which is connected to a digital detector 64 which provides data 65 and is connected to the control unit 61. In operation, the timer 60, the control unit 61 and the output circuit serve as the transmitter part of the reader and transmit radio-frequency signals by way of the first tuned circuit 66. The first tuned circuit 66, the analogue detector 63 and the digital detector 64 serve as the receiver part of the reader. In operation, "ready to send" signals are received by the first tuned circuit 66, passed to the analogue detector 63, through the digital detector 64 and then to the control unit 61. In operation, also, data signals are received by the first tuned circuit 66, passed through the analogue detector 63 to the digital detector 64.

The transponder shown in Fig. 6 includes a second tuned circuit 77 connected to a power supply 70. The second tuned circuit 77 is connected, also, to an "end of burst" (EOB) detector 71 which is connected to a random delay generator 72 which is connected to a second control unit 73. The second control unit 73 is connected to a data generator 75 which is connected to a modulator 76 which is connected to the second tuned circuit 77. The control unit 73 is connected, further, to a "ready to send" (RTS) generator 74 which, too, is connected to the modulator 76. In operation, the second tuned circuit 77 receives the burst interrogation signal from a reader and passes the signal to the "end of burst" (EOB) detector 71 which activates the random delay generator 72 when an "end of burst" signal is detected. The random delay generator 72 activates the second control unit 73 in due course and the second control unit 73 exercises its control over the "ready to send" (RTS) generator 74 to cause a "ready to send" (RTS) signal to be sent to the second tuned circuit 77 by way of the modulator 76. When the "ready to send" (RTS) signal is acknowledged by the reader (which sends the "clear to send" signal) and the second control unit 73 is so informed by the "end of burst" detector 71, the second control unit 73 exercises its control over the data generator 75 to cause data to be sent to the second tuned circuit 77 by way of the modulator 76.

Although the present invention has been described in accordance with the embodiments shown, one of ordinary skill in the art will readily recognise that there may be variations to the embodiments and those variations would be within the scope of the present invention. Accordingly, many modifications may be made by one of ordinary skill without departing from the scope of the appended claims.

## Claims

1. The method of reading a plurality of transponders comprising:
(a) pulsing of an interrogation field which is sent by a reader, (41) the end of each pulse or the beginning of gaps between pulses constituting End Of Burst Signals as a time base;
(b) detecting (52) the End Of Burst signals at the transponders;
(c) generating (54) a Request To Send signal having a random pattern encoded therein with a delay after the End Of Burst signals by the each of the plurality of transponders;
**characterized by**:
(d) providing (43) a second End Of Burst signal by the reader after receiving (42) a valid Request To Send signal from one of the plurality of transponders;
(e) transmitting (56) the main data by said one of the transponders; and
(f) upon detecting a collision at the reader of a plurality of Request To Send signals from the transponders, continuing from step (a) until all the transponders in the interrogation field are detected.

2. The method of claim 1 **characterized in that** the one transponder enters (57) sleep mode after the data transmission is acknowledged (45) by another End Of Burst Signal from the reader.

3. The method of claim 2 **characterized by** repeating steps (d) and (e) for the remaining transponders of the plurality of transponders.

4. The method of any one of claims 1 to 3, wherein in step (a) the interrogation field is pulsed periodically.

5. The system of reading a plurality of transponders comprising:
a reader and a plurality of transponders;
control means (60, 61, 62) for pulsing of an interrogation field which is sent by a reader, the end of each pulse or the beginning of gaps between pulses constituting (41) End Of Burst Signals as a time base;
End Of Burst signal detector in each of the plurality of transponders for detecting the End Of Burst signals;
RTS generator means (73, 74) in each of the plurality of transponders for generating (54) a Request To Send signal having a random pattern encoded therein with a delay after the End Of Burst signals;
**characterized by**:
the control means (60, 61, 62) configured to provide (43) a second End Of Burst signal which is sent by the reader after receiving (42) a valid Request To Send signal from one of the plurality of transponders; and
modulator means (75, 76) for transmitting (56) the main data by one of the transponders; and
detector means (63, 64) for detecting a collision at the reader by a plurality of Request To Send signals from the transponders.

6. The system of claim 5 **characterized in that** the transponders are adapted to enter (57) sleep mode after the data transmission is acknowledged by another End Of Burst Signal from the reader.

7. The system of claim 5 **characterized in that**
the reader is adapted to pulse the
interrogation field periodically.

## Patentansprüche

1. Das Verfahren zum Lesen einer Vielzahl von Transpondern bestehend aus:
a) der Pulsierung eines Abfragefelds, die von einem Lesergerät geschickt wird, (41) das Ende jeder Pulsierung oder der Anfang von Intervallen zwischen den Pulsierungen bilden End of Burst Signals als die Zeitbasis;
b) der Ermittlung (52) der End of Burst Signalen beim Transpondern
c) der Erzeugung (54) eines Request to Send Signals mit einem kodierten Zufallsmuster darin, das eine Verspätung nach den End of Burst Signalen beim jeder der Vielzahl von Transpondern hat;
**gekennzeichnet durch**:
d) das Bereitstellen (43) eines zweiten End of Burst Signals vom Leser nach Empfang (42) eines gültigen RTS-Signals von einem der Vielzahl von Transpondern;
e) die Übertragung (56) der Hauptdaten von einem der jeweiligen Transponder; und
f) nach der Ermittlung einer Kollision beim Leser einer Vielzahl von RTS-Signalen von den Transpondern, das Weitergehen vom Schritt (a) bis alle der Transponder in dem Abfragefeld ermittelt werden.

2. Das Verfahren nach Anspruch 1, gekennzeichnet indem der ein Transponder in einen Schlafmodus (57) schaltet, wenn die Datenübertragung von einem anderen End of Burst Signal von dem Leser erkannt (45) ist.

3. Das Verfahren nach Anspruch 2, **gekennzeichnet durch** die Wiederholung der Schritte (d) und (e) für die restlichen Transponder der Vielzahl von Transpondern.

4. Das Verfahren nach einem der Ansprüche 1 bis 3, wobei im Schritt (a) das Abfragefeld periodisch gepulst ist.

5. Das System zum Lesen einer Vielzahl von Transpondern bestehend aus:
einem Leser und einer Vielzahl von Transpondern;
dem Steuermittel (60, 61, 62) zur Pulsierung eines Abfragefelds, die von einem Leser geschickt wird, das Ende jeder Pulsierung oder der Anfang von Intervallen zwischen den Pulsierungen bilden (41) End of Burst Signals als die Zeitbasis;
einem Ermittler zum End of Burst Signal in jeder der Vielzahl von Transpondern, um die End of Burst Signalen zu ermmitteln;
RTS-Erzeugermittel (73, 74) in jedem der Vielzahl von Transpondern, um (54) ein Request To Send Signal mit einem kodierten Zufallsmuster darin, mit einer Verspätung nach den End of Burst Signalen zu erzeugen;
**gekennzeichnet durch**:
das Steuermittel (60, 61, 62), so konfiguriert, um ein zweites End of Burst Signal bereitzustellen, das von dem Leser nach Empfang (42) eines gültigen RTS-Signals von einem der Vielzahl von Transpondern geschickt wird; und
das Modulatormittel (75, 76) für die Übertragung (56) der Hauptdaten von einem der jeweiligen Transponder; und
das Ermittlermittel (63, 64), um eine Kollision beim Leser von einer Vielzahl von Request To Send Signalen von den Transpondern zu ermitteln.

6. Das System nach Anspruch 5, gekennzeichnet indem die Transponder so angepasst werden, um Schlafmodus (57) zu schalten, wenn die Datenübertragung von einem anderen End of Burst Signal von dem Leser erkannt ist.

7. Das System nach Anspruch 5, gekennzeichnet indem der Leser so angepasst wird, um das Abfragefeld periodisch zu pulsen.

## Revendications

1. Une méthode de lire une pluralité de transpondeurs comprenant :
a) l'impulsion d'un champ d'interrogation qui est envoyée par un lecteur (41) à la fin de chaque impulsion ou au début des intervalles entre les impulsions constituant les End of Burst Signals comme un base de temps;
b) décelant (52) les End of Burst Signais aux transpondeurs ;
c) générant (54) un signal Request to Send (RTS) ayant un motif aléatoire encodé dedans avec un retard après les End of Burst Signals par chacun de la pluralité de transpondeurs ;
caractérisée
d) en fournissant (43) un deuxième End of Burst Signal par le lecteur après avoir reçu (42) un signal valide Request To Send d'un de la pluralité de transpondeurs;
e) en transmettant (56) les données principales par un desdits transpondeurs ; et
f) après avoir décelé une collision au lecteur d'une pluralité de Request To Send Signals des transpondeurs, continuant d l'étape (a) jusqu'à tous les transpondeurs dans le champ d'interrogation ont été décelés.

2. La méthode selon la revendication 1, **caractérisée en ce qu'**un transpondeur se lance (57) au mode veille après la transmission des données a été reconnue (45) par un autre End of Burst Signal du lecteur.

3. La méthode selon la revendication 2 **caractérisée par** la répétition des étapes (d) et (e) pour les transpondeurs restants de la pluralité de transpondeurs.

4. La méthode selon les revendications 1-3, où dans l'étape (a) le champ d'interrogation est subi à l'impulsion périodiquement.

5. Le système de lire une pluralité de transpondeurs comprenant :
un lecteur et une pluralité de transpondeurs ;
les moyens de réglage (60, 61, 62) pour l'impulsion d'un champ d'interrogation qui est envoyée par un lecteur, le fin de chaque impulsion ou le début des intervalles entre les impulsions constituant (41) les End of Burst Signals comme un base de temps ;
un détecteur d'End of Burst Signal dans chacun de la pluralité de transpondeurs pour détecter les End of Burst Signals ;
les moyens de générer les RTS (73, 74) dans chacun de la pluralité de transpondeurs pour générer (54) un signal Request To Send ayant un motif aléatoire encodé dedans avec un retard après les End of Burst Signals ;
**caractérisé par**:
les moyens de réglage (60, 61, 62) configurés pour fournir (43) un deuxième End of Burst Signal qui est envoyé par le lecteur après avoir reçu (42) un signal valide Request To Send d'un de la pluralité de transpondeurs; et
les moyens modulateurs (75, 76) pour transmettre (56) les données principales par un des transpondeurs ; et
les moyens de détection (63, 64) pour détecter une collision au lecteur par une pluralité de signaux Request To Send des transpondeurs.

6. Le système selon la revendication 5 **caractérisé en ce que** les transpondeurs sont adaptés pour se lancer au mode veille (57) après la transmission des données a été reconnue par un autre End Of Burst Signal du lecteur.

7. Le système selon la revendication 5 **caractérisé en ce que** le lecteur est adapté pour exécuter les impulsions au champ d'interrogation périodiquement.
